# EUROPÄISCHE PATENTANMELDUNG

(11) **EP 4 850 968 A2**
(43) Veröffentlichungstag der Anmeldung: **09.12.2026**
(21) Anmeldenummer: 26214452.0
(22) Anmeldetag: 15.09.2020
(51) Int. Cl.: B60L 53/14

(54) **LADEANSCHLUSSVORRICHTUNG MIT ENERGIEMESSVORRICHTUNG FÜR ELEKTROFAHRZEUGE**

(30) Priorität: 16.09.2019 DE 102019006522
(62) Dokumentnummer(n) der früheren Anmeldung(en) nach Art. 76 EPÜ: 20793238.5 / 4 031 402
(71) Anmelder: KEBA Energy Automation GmbH, 4040 Linz (AT)
(72) Erfinder: WEIDINGER, Gerhard, 4614 Marchtrenk (AT); HUG, Markus, 4501 Neuhofen an der Krems (AT); EILMSTEINER, Heribert, 4020 Linz (AT)
(74) Vertreter: Burger, Hannes Alfred

(57) **Zusammenfassung**

Die Erfindung betrifft eine Ladeanschlussvorrichtung (1) für Elektrofahrzeuge. Die Ladeanschlussvorrichtung (1) umfasst eine elektronische Steuervorrichtung mit welcher ein Ladevorgang eines Elektrofahrzeugs überwachbar und/oder beeinflussbar ist. Weiters ist eine Leistungsschaltvorrichtung vorgesehen, welche in einem ersten Schaltzustand eine Bereitstellung von elektrischer Energie an einer Schnittstelle (7, 9) der Ladeanschlussvorrichtung (1) ermöglicht. In einem zweiten Schaltzustand der Leistungsschaltvorrichtung ist eine Bereitstellung von elektrischer Energie an der zumindest einen Schnittstelle (7, 9) unterbindbar. Eine Energiemessvorrichtung dient zum Messen der über die Ladeanschlussvorrichtung (1) an ein Elektrofahrzeug abgegebenen elektrischen Energie. Die Energiemessvorrichtung ist weiters dazu eingerichtet, einen Energiefluss zu unterbinden, wobei die Energiemessvorrichtung für den Fall einer auszuführenden Unterbindung des Energieflusses priorisierten steuerungstechnischen Einfluss auf die Leistungsschaltvorrichtung hat und eine Herstellung oder Beibehaltung des zweiten Schaltzustandes der Leistungsschaltvorrichtung bewirkt.

## Beschreibung

Die Erfindung betrifft eine Ladeanschlussvorrichtung für Elektrofahrzeuge in Kombination mit einer Energiemessvorrichtung, wie dies in den Ansprüchen angegeben ist.

Es ist allgemein bekannt, dass zum Aufladen bzw. Regenerieren des Energiespeichers eines elektrisch betriebenen Fahrzeuges ein solches Fahrzeug für eine gewisse Zeit abgestellt und mit einer elektrischen Energiequelle, üblicherweise dem örtlich vorhandenen Stromnetz, elektrisch verbunden wird. Moderne elektrische Fahrzeuge haben dabei mittlerweile eine akzeptable Reichweite von mehreren 100km, die mit einem voll aufgeladenen Energiespeicher zurückgelegt werden können, und weiters eine entsprechend hohe Antriebsleistung in der Größenordnung von 100kW oder mehr, was eine komfortable und rasche Fortbewegung ermöglicht.

Im Vergleich zu Fahrzeugen, welche Verbrennungskraftmaschinen für den Antrieb nutzen und während nur sehr kurzer Stillstandszeit in der Regel mit einem flüssigen oder gasförmigen Energieträger betankt werden, dauert der Ladevorgang der heute für Elektrofahrzeuge üblichen elektrochemischen Energiespeicher relativ lange. Um die Einsatzzeit bzw. Verfügbarkeit eines elektrischen Fahrzeuges zu verbessern, wird daher danach getrachtet, die Ladezeit möglichst kurz zu halten, wofür jedoch während dem Ladevorgang eine erhebliche elektrische Leistung benötigt wird. Diese muss vom elektrischen Netz bezogen, typischerweise über die Ladeelektronik im Fahrzeug umgewandelt und schließlich in den Energiespeicher des Fahrzeuges übertragen werden. Die Größenordnung der Ladeleistung liegt heute im Bereich von bis zu 22kW oder auch mehr, und ist damit deutlich höher als die elektrische Leistung, die beispielsweise von einer üblichen Haushaltssteckdose bezogen werden kann. Elektrisch betriebene Kraftfahrzeuge stellen also im Vergleich zu anderen in Haushalten üblichen, elektrischen Verbrauchern durchaus Großverbraucher dar. Selbst wenn ein Stromanschluss mit prinzipiell ausreichend hoher elektrischer Anschlussleistung zur Verfügung steht, kann es aufgrund der Gesamtbelastung in Teilen des Stromnetzes zu zeit- oder situationsabhängigen Einschränkungen bei der tatsächlich verfügbaren Leistung kommen.

Für den Ladevorgang elektrischer Kraftfahrzeuge - soweit es sich nicht um Kleinfahrzeuge in der Art eines Elektrofahrrades oder um Vergleichbares handelt - sind daher spezielle Ladeanschlussvorrichtungen erforderlich oder zumindest zweckmäßig, welche im Gegensatz zu einer herkömmlichen Steckdose nicht nur eine entsprechend hohe elektrische Anschlussleistung bereitstellen bzw. übertragen können, sondern auch zusätzliche Kommunikationsmittel aufweisen, mit denen die Ladeelektronik eines angeschlossenen Fahrzeuges die tatsächlich jeweils beziehbare Ladeleistung ermitteln kann bzw. auf die aktuelle Netzsituation reagieren kann, ohne das Netz bzw. die Zuleitung zu überlasten und damit eine Abschaltung zu verursachen. Weiters sind in solchen Ladeanschlussvorrichtungen eine Reihe von Sicherheitseinrichtungen implementiert, beispielsweise eine Sperrvorrichtung, die ein unbefugtes Abstecken oder ein Abstecken unter Volllast mit entsprechender Lichtbogenbildung verhindert. Die entsprechenden Ladeanschlussvorrichtungen sorgen typischerweise auch dafür, dass beim Auftreten von Fehlerströmen, bei Überlast und fallweise bei unzulässigen Rückspeiseströmen abgeschaltet bzw. entsprechend signalisiert wird.

Derartige Ladeanschlussvorrichtungen werden beispielsweise in den Druckschriften US 4,532,418 A, DE 42 13 414 C2, FR 2 766 950 A1, JP 11-122714 A, US 6,362,594 B2, WO 2007/141543 A2, WO 2010/011545 A1, WO 2010/133959 A2 und AT 507 605 A1 beschrieben.

Der Stromanschluss, sowohl netzseitig als auch fahrzeugseitig, ist aufgrund der hohen zu übertragenden Leistung in der Regel als dreiphasiger bzw. mehrphasiger Starkstromanschluss mit entsprechend großen Leitungsquerschnitten von typisch 4 bis 6 mm², fallweise aber auch mit bis zu 16 mm² ausgeführt. Zweckmäßigerweise sind die Ladeanschlussvorrichtungen in unmittelbarer Nähe zu den Abstellplätzen der jeweiligen Elektrofahrzeuge installiert, wobei es sich üblicherweise um Garagen, Tiefgaragen, überdachte Parkflächen und dergleichen handelt, welche privat, fallweise aber auch öffentlich zugänglich oder zumindest für eine größeren Personenkreis zugänglich sein können.

Das Gehäuse solcher Ladeanschlussvorrichtungen muss dabei die hantierenden Personen vor dem Kontakt mit spannungsführenden Teilen im Innenraum bzw. vor lebensgefährlichen Stromschlägen schützen. Darüber hinaus schützt das Gehäuse die innenliegenden elektrischen und elektronischen Komponenten vor mechanischer Beschädigung sowie Schmutz und Feuchtigkeit und weiteren im Umfeld von Fahrzeugen zu erwartenden Stoffen, wie beispielsweise Streusalz oder vergleichbar wirkende Auftaumittel, und stellt damit deren dauerhaft zuverlässige Funktion sicher.

Die Ladestationen neuerer Art werden bereits als relativ kompakte Einheiten gefertigt, deren Funktion und Sicherheit vor der Auslieferung geprüft wird. Alle für die Funktion und Sicherheit der Einheit relevanten Komponenten sind in diesem geschlossenen Gehäuse angeordnet und damit vor Beschädigung oder Manipulation geschützt. Üblicherweise sind auch nur die Anschlussklemmen für den Anschluss an das Stromnetz und gegebenenfalls Schnittstellen für eine Anbindung an Kommunikationsnetze über separat abnehmbare Gehäuseteile für den mit der Installation und Inbetriebnahme betrauten Fachmann zugänglich. Dieser ist verantwortlich für die ordnungsgemäße Installation bzw. Montage und den Anschluss an das Stromnetz.

Mit zunehmender Verbreitung von Elektrofahrzeugen besteht auch der Wunsch bzw. das Erfordernis einer öffentlich verfügbaren bzw. allgemein zugänglichen Ladeinfrastruktur. In diesem Zusammenhang wird es zunehmend auch erforderlich sein, die von Energieversorgungsunternehmen bzw. Netzbetreibern bereitgestellte elektrische Energie unter anderem in Abhängigkeit des jeweiligen Verbrauchs in Rechnung zu stellen. Diesen Anforderungen entsprechende Ladeanschlussvorrichtungen können darüber hinaus Mittel zur Autorisierung bzw. Freigabe des Energiebezugs beinhalten, beispielsweise via einen kodierten RFID-Transponder oder via einen Schlüsselschalter, oder technische Identifikationsmittel umfassen, um den Benutzer zu identifizieren bzw. um Informationen für Verrechnungszwecke zu erfassen und gegebenenfalls diese Daten über datentechnische Netzwerkverbindungen mit zentralen Clearing-Stellen auszutauschen. Weiters können solche Ladeanschlussvorrichtungen auch Mittel zur Messung und Überwachung der übertragenen Leistung, des Stromes, oder der Energiemenge beinhalten. Vor allem dann, wenn der Bezug der elektrischen Energie einer Abrechnung unterliegt, ist es besonders wichtig, dass diese Abrechnung stets korrekt und den tatsächlichen Gegebenheiten entsprechend ausgeführt werden kann. Dies ist mit den bisher bekannten Systemen nur bedingt zufriedenstellend erzielbar.

Aufgabe der vorliegenden Erfindung war es, die Nachteile des Standes der Technik zu überwinden und eine Vorrichtung zur Verfügung zu stellen, mittels derer der Bezug von elektrischer Energie an einer allgemein zugänglichen Ladeanschlussvorrichtung mit höchster Korrektheit verrechenbar ist, wobei die Kosten zur Schaffung eines derartigen Systems möglichst gering gehalten werden sollen.

Diese Aufgabe wird durch eine Vorrichtung gemäß den Ansprüchen gelöst.

Die erfindungsgemäße Ladeanschlussvorrichtung für Elektrofahrzeuge umfasst:
- zumindest eine erste Schnittstelle zum Beziehen von elektrischer Energie aus einem ortsfesten Stromversorgungsnetz,
- zumindest eine zweite Schnittstelle zur gesteuerten Abgabe von elektrischer Energie an ein Elektrofahrzeug,
- eine elektronische Steuervorrichtung mit welcher ein Ladevorgang eines Elektrofahrzeugs überwachbar und/oder beeinflussbar ist,
- eine Leistungsschaltvorrichtung mit einem ersten Schaltzustand in welchem eine Bereitstellung von elektrischer Energie an der zumindest einen zweiten Schnittstelle freischaltbar ist und mit einem zweiten Schaltzustand in welchem eine Bereitstellung von elektrischer Energie an der zumindest einen zweiten Schnittstelle unterbindbar ist,
- eine Energiemessvorrichtung zum Messen bzw. Erfassen der über die Ladeanschlussvorrichtung an ein Elektrofahrzeug abgegebenen elektrischen Energie,
- ein Gehäuse in welchem wenigstens die elektronische Steuervorrichtung und die Leistungsschaltvorrichtung und gegebenenfalls die Energiemessvorrichtung untergebracht sind.

Die Energiemessvorrichtung ist weiters dazu eingerichtet, einen Energiefluss zu der wenigstens einen zweiten Schnittstelle zu unterbinden, wenn fehlende Mess- bzw. Erfassungsbereitschaft vorliegt. Dabei hat die Energiemessvorrichtung priorisierten bzw. mitentscheidenden steuerungstechnischen Einfluss auf die Herstellung oder Beibehaltung der jeweiligen Schaltzustände der Leistungsschaltvorrichtung. Insbesondere ist die Energiemessvorrichtung dazu eingerichtet, für den Fall einer auszuführenden Unterbindung des Energieflusses zu der wenigstens einen zweiten Schnittstelle, eine Überführung der Leistungsschaltvorrichtung in den zweiten Schaltzustand zu bewirken bzw. eine Beibehaltung des zweiten Schaltzustandes zu bewirken.

Die erfindungsgemäße Ladeanschlussvorrichtung bringt den Vorteil mit sich, dass dadurch der Bezug von elektrischer Energie möglichst korrekt bzw. hochgradig den tatsächlichen Verbrauchswerten entsprechend in Abrechnung gestellt werden kann. Insbesondere ist es dadurch ermöglicht, elektrische Energie nur dann an der zweiten Schnittstelle, insbesondere an der Abgangs-Schnittstelle der Ladeanschlussvorrichtung bereitzustellen, wenn die Energiemessvorrichtung tatsächlich bereit oder imstande ist, einen elektrischen Energiefluss zeitgerecht bzw. verbrauchssynchron zu messen bzw. zu erfassen. Technisch bedingte, erforderliche Zeiten zur Verarbeitung oder Übertragung von Messdaten haben dadurch keine negativen Auswirkungen auf die Genauigkeit der tatsächlich bezogenen Energiemenge. Letztendlich können dadurch asynchrone bzw. zeitverzögerte Bereitstellungs- und Messvorgänge von elektrischer Energie in einfacher und zuverlässiger Art und Weise vermieden werden. Darüber hinaus können dadurch die Kosten für die Schaffung einer anspruchsgemäßen Ladeanschlussvorrichtung gering gehalten werden. Durch die anspruchsgemäße Ausführung ist es nämlich nicht erforderlich, für die Energiemessvorrichtung hoch leistungsfähige Komponenten, beispielsweise "hoch-performante" Mikroprozessoren und/oder Datenspeicher mit besonders schnellen Verarbeitungszeiten, vorzusehen, um möglichst verzögerungsfreie bzw. ausreichend rasche mess- bzw. datentechnische Verarbeitungen erreichen zu können. Die erfindungsgemäße Ladeanschlussvorrichtung kann dadurch auch den jeweiligen nationalen Vorschriften aus Gesetzen und Richtlinien, wie den mess- bzw. eichrechtlichen Anforderungen in Deutschland oder den Maß- und Eichrechtsrichtlinien in Österreich, besser gerecht werden. Dies bringt Vorteile sowohl für den Betreiber der Ladeanschlussvorrichtung, für das Energieversorgungsunternehmen und auch für den die elektrische Energie beziehenden Kunden bzw. Verbraucher.

Insbesondere kann vorgesehen sein, dass die Energiemessvorrichtung zur Abgabe oder Bereitstellung eines steuerungstechnischen Freigabe- und/oder Sperrsignals ausgebildet ist. Dadurch kann die Energiemessvorrichtung in technisch einfacher und trotzdem zuverlässiger Art und Weise in die Betriebs- bzw. Ablaufsteuerung der Ladeanschlussvorrichtung eingebunden werden, ohne dass die gesamte Ladestation einer Zulassung bzw. Zertifizierung nach nationalen Vorschiften bezüglich der Energiemessung bedarf. Zudem kann dadurch eine Zustandssteuerung der Schaltzustände der Leistungsschaltvorrichtung mit geringem hardwaretechnischen Aufwand umgesetzt werden, wobei auch eine Implementierung in Ladeanschlussvorrichtungen unterschiedlicher Type problemlos möglich ist.

Weiters kann es zweckmäßig sein, wenn die Energiemessvorrichtung mit der Steuervorrichtung verbunden ist und die Steuervorrichtung zur Auswertung des steuerungstechnischen Freigabe- und/oder Sperrsignals ausgebildet ist, wobei die Steuervorrichtung mit der Leistungsschaltvorrichtung verbunden ist und die Leistungsschaltvorrichtung in Abhängigkeit der Auswertung des Freigabe- und/oder Sperrsignals von der Steuervorrichtung ansteuerbar ist. Dadurch kann eine quasi zentrale Ansteuerung der Leistungsschaltvorrichtung durch die Steuervorrichtung bzw. durch eine Leistungsschalter-Ansteuereinheit gewährleistet werden. Von Vorteil ist dabei weiters, dass dadurch eine Mehrzahl weiterer Kriterien, welche für die Aktivierung oder Deaktivierung der Leistungsschaltvorrichtung maßgeblich oder mitentscheidend sind, in einfacher Art und Weise in die Ablaufsteuerung bzw. in die Ansteuerung der Leistungsschaltvorrichtung einfließen können.

Vorteilhaft ist auch eine Ausprägung, gemäß welcher die Energiemessvorrichtung zur Abgabe eines Sperrsignals ausgebildet ist, wenn seitens der Energiemessvorrichtung fehlende Bereitschaft zum Messen eines Energieflusses zu der wenigstens einen zweiten Schnittstelle gegeben ist. Dadurch ist sichergestellt, dass stets die tatsächlich bezogene Energiemenge möglichst exakt ermittelt werden kann. Dies unabhängig von sporadisch auftretenden oder inhärent vorliegenden Verarbeitungs- bzw. Reaktionszeiten der Energiemessvorrichtung bzw. des daran angebundenen Backend-Systems.

Insbesondere ist es vorteilhaft, wenn die Steuervorrichtung im Zuge der Auswertung des Freigabe- und/oder Sperrsignals der Energiemessvorrichtung zur logischen UND-Verknüpfung des Freigabe- und/oder Sperrsignals der Energiemessvorrichtung mit wenigstens einem quasi internen Freigabekriterium bzw. einer Schaltanforderung von Seiten der Steuervorrichtung ausgebildet ist. Dadurch ist eine eindeutige Auswertung der Systemzustände und eine fehlerfreie Ansteuerung der Leistungsschaltvorrichtung erzielbar.

Außerdem kann vorgesehen sein, dass die Energiemessvorrichtung, insbesondere deren Mess- und Auswertungssoftware, messrechtlich geeicht und/oder messtechnisch zertifiziert ist und somit die Konformität zu den jeweiligen nationalen Richtlinien, Normen und Gesetzen bestätigt ist. Dadurch kann gewährleistet werden, dass die Energiemessvorrichtung messtechnischen und/oder eichrechtlichen Anforderungen entspricht und der Bezug von elektrischer Energie sowohl für den Betreiber, als auch für den Kunden bzw. Benutzer der Ladeanschlussvorrichtung rechtskonform ablaufen kann.

Entsprechend einer zweckmäßigen Ausgestaltung ist vorgesehen, dass die Steuervorrichtung in ihren Abläufen und Funktionen zumindest teilweise durch Betriebssoftware gesteuert oder beeinflusst ist und diese Betriebssoftware in eichrechtlicher und/oder messtechnischer Hinsicht nicht zertifiziert ist, sodass hier keine Konformität zu den jeweiligen nationalen Gesetzen und Richtlinien bezüglich der Energiemessung besteht. Die Betriebssoftware für den Betrieb bzw. den grundlegenden Funktionsumfang der Ladeanschlussvorrichtung kann dadurch relativ einfach aktualisiert bzw. häufiger upgedatet werden. Änderungen in der Betriebssoftware der Ladeanschlussvorrichtung müssen dadurch nicht zwingend einer aufwändigen Neu-Zertifizierung unterzogen werden. Eichrechtlich relevante Softwarebestandteile in der Energiemessvorrichtung in Zusammenhang mit einer exakten bzw. rechtskonformen Messung und Erfassung des Energiebezuges bleiben durch diese Maßnahmen von einem Update der Betriebssoftware unberührt. Die Kosten und allfällige Komplikationen in Zusammenhang mit notwendigen bzw. gewünschten Softwareupdates an der Ladeanschlussvorrichtung können so möglichst gering gehalten werden.

Weiters kann eine Identifikationsvorrichtung bzw. Autorisierungsvorrichtung zur Identifizierung bzw. Autorisierung unterschiedlicher Benutzer der Ladeanschlussvorrichtung ausgebildet sein, wobei die Energiemessvorrichtung eine Speichervorrichtung umfasst oder auf eine Speichervorrichtung Zugriff hat, in welcher Daten zu Ladevorgängen bzw. Energiebezügen der jeweiligen Benutzer hinterlegbar sind. Dadurch kann eine Multi-User-Nutzbarkeit der Ladeanschlussvorrichtung durch verschiedene Benutzer ermöglicht und eine individuell zugeordnete Abrechnung der Energiekosten gewährleistet werden.

Entsprechend einer vorteilhaften Weiterbildung ist vorgesehen, dass die Daten zu den Ladevorgängen von der Energiemessvorrichtung datentechnisch unsigniert hinterlegbar sind bzw. hinterlegt werden. Dadurch kann eine möglichst verzögerungsfreie bzw. besonders rasche Erfassung und Speicherung der jeweiligen Energiemengen bzw. Energiebezüge erreicht werden. Ungenaue Erfassungen bzw. zeitversetzte Zuordnungen aufgrund von Trägheiten oder relativ langen Verarbeitungszeiten im Mess- bzw. Erfassungssystem können so hintan gehalten werden. Zudem kann dadurch auch mit standardmäßigen bzw. relativ kostengünstigen Hardwarekomponenten eine hochgenaue Messung bzw. Erfassung des jeweiligen Energiebezugs je Ladevorgang bzw. des insgesamt angefallenen Energiebezugs erreicht werden.

Gemäß einer weiterführenden, zweckmäßigen Maßnahme ist vorgesehen, dass die Energiedaten-Speichervorrichtung in einem eichrechtlich relevanten Teilabschnitt der Energiemessvorrichtung angeordnet ist. Dadurch können in Bezug auf die Energiemessvorrichtung extern angeordnete und separat zu zertifizierende Komponenten bzw. Komponentenansammlungen erübrigt werden, wodurch eine geringere Komplexität der Ladeanschlussvorrichtung erzielbar ist. Zudem sind dadurch auch geringere Kosten in Bezug auf Herstellung und Zertifizierung der Ladeanschlussvorrichtung erzielbar.

Ferner kann es zweckmäßig sein, wenn die Energiemessvorrichtung und die Steuervorrichtung jeweils eigene Mikrocontroller mit jeweils eigener Firmware aufweisen. Dadurch sind zwei getrennte bzw. baulich eigenständige Funktionskomponenten vorhanden, wodurch eine Umsetzung von messtechnischen Anforderungen und/oder eichrechtlichen Regulierungen erleichtert werden kann.

Darüber hinaus kann vorgesehen sein, dass die Energiemessvorrichtung über ein Bussystem, beispielsweise mittels CAN-Bus oder einen anderen seriellen Datenbus, mit der Steuervorrichtung kommunikationsverbunden ist, wobei die Firmware der Steuervorrichtung und die Firmware der Energiemessvorrichtung auch ohne Datenverbindung zwischen der Steuervorrichtung und der Energiemessvorrichtung lauffähig sind. Dadurch sind die Energiemessvorrichtung und die Steuervorrichtung eigenständig lauffähig. Insbesondere ist die Energiemessvorrichtung eigenständig in dem Sinn, dass sie für Ihre Aufgaben die notwendige Peripherie direkt ansteuern kann und dabei nicht auf ein nicht zertifiziertes System zugreifen muss. Die Steuervorrichtung ist eigenständig in dem Sinn, dass die Firmware auch ohne Energiemessvorrichtung lauf- und kommunikationsfähig ist, in diesem Fall aber keine messtechnisch bzw. eichrechtlich konforme Ladung durchführen kann.

Gemäß einer Weiterbildung ist es möglich, dass die Energiemessvorrichtung mit einem Display verbunden ist, welches Display zur Anzeige mess- und eichrechtlich relevanter Daten, beispielsweise eines Gesamt-Energieverbrauchs seit Inbetriebnahme der Energiemessvorrichtung und/oder einer Bezugsmenge je Ladevorgang, vorgesehen ist. Dadurch kann von einem Benutzer jederzeit kontrolliert bzw. evaluiert werden, welche Energiemenge im Zuge des jeweiligen Ladevorganges bezogen wurde. Nachdem das Display unmittelbar von der Energiemessvorrichtung angesteuert ist, welche Energiemessvorrichtung vorzugsweise mess- bzw. eichrechtlich zertifiziert ist, ist eine betrügerische Manipulation der Anzeigeinhalte oder eine Irreführung des jeweiligen Benutzers unmöglich oder zumindest stark erschwert.

Ferner kann es zweckmäßig sein, wenn die Steuervorrichtung dazu eingerichtet ist, vor jedem Start eines Ladevorganges eine datentechnische Kennung, beispielsweise eine Seriennummer der Energiemessvorrichtung auszulesen und auf Gültigkeit zu überprüfen, wobei von der Steuervorrichtung der Start eines Ladevorganges unterbindbar ist, wenn die datentechnische Kennung als ungültig oder unbekannt erkannt ist. Betrügerische Manipulationen an der Ladeanschlussvorrichtung, beispielsweise ein nicht autorisierter Austausch der Energiemessvorrichtung, können dadurch zuverlässig vereitelt werden. Letztendlich können dadurch nichteichrechtskonforme Energiebereitstellungen oder Energiebezüge an der Ladeanschlussvorrichtung effektiv unterbunden werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform der Ladeanschlussvorrichtung in perspektivischer Ansicht auf die Gehäusevorderseite;
- Fig. 2: ein beispielhaftes Blockschaltbild zur Veranschaulichung von Komponenten und Funktionalitäten der Ladeanschlussvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

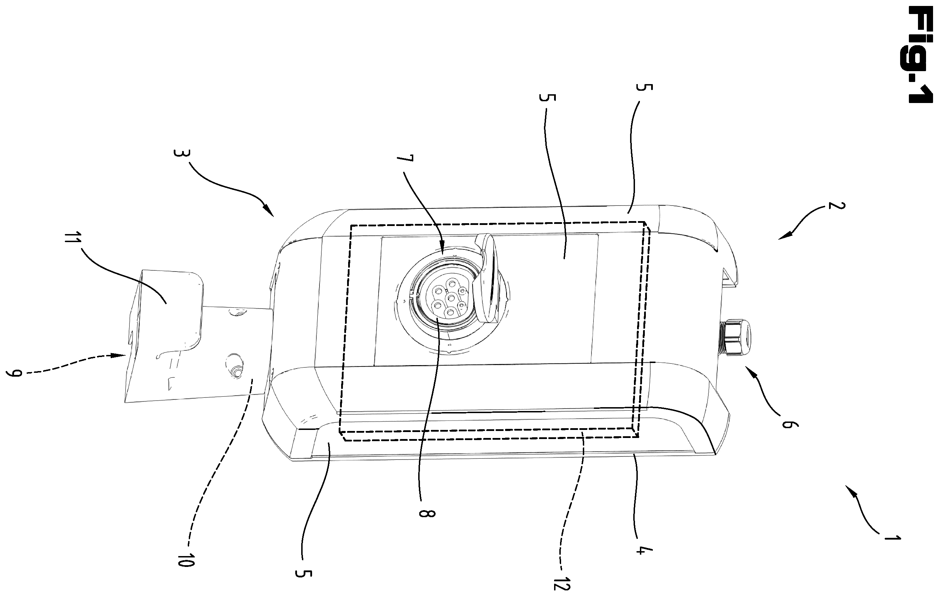

In den Fig. 1 ist eine beispielhafte Ausführungsform einer Ladeanschlussvorrichtung 1 für Elektrofahrzeuge veranschaulicht. Diese Ladeanschlussvorrichtung 1 ist zum Aufladen bzw. Regenerieren eines Energiespeichers, insbesondere einer oder mehrerer Batterien, eines Elektrofahrzeuges vorgesehen, wobei die Ladeanschlussvorrichtung 1 das Bindeglied zwischen einem ortsfesten Stromversorgungsnetz und einer Ladevorrichtung bzw. des Energiespeichers des Elektrofahrzeugs bildet. Die Ladevorrichtung des Energiespeichers kann dabei als Bestandteil der Ladeanschlussvorrichtung 1 ausgebildet sein. In den derzeit üblichen Ausführungsformen ist die Ladevorrichtung jedoch vorzugsweise im Elektrofahrzeug selbst eingebaut. Die Ladeanschlussvorrichtung 1 stellt dann eine Art intelligente Stromtankstelle für Elektrofahrzeuge dar.

Die gezeigte Ladeanschlussvorrichtung 1 umfasst ein Gehäuse 2, welches seinerseits aus einem vorderen Gehäuseteil 3 und einem hinteren Gehäuseteil 4 gebildet ist, wobei der hintere Gehäuseteil 4 ortsfest, beispielsweise an einer Hauswand oder einer Säule, montiert ist und der vordere Gehäuseteil 3 bedarfsweise von dem hinteren Gehäuseteil 4 abgenommen werden kann. Im vorliegenden Ausführungsbeispiel ist der vordere Gehäuseteil 3 aus mehreren, weiteren Gehäuseteilen 5 gebildet.

An einer Oberseite des Gehäuses 2 ist eine erste Schnittstelle 6 zur Entnahme von elektrischer Energie aus dem ortsfesten Stromversorgungsnetz angeordnet. Über diese erste Schnittstelle 6 bezieht die Ladeanschlussvorrichtung 1 die elektrische Energie aus dem Stromversorgungsnetz, wobei im vorliegenden Ausführungsbeispiel die erste Schnittstelle 6 als fix verdrahtete Leitungsschnittstelle ausgeführt ist. Um die typischerweise benötigte, elektrische Leistung in die Ladeanschlussvorrichtung 1 bzw. von dort weiter zum Elektrofahrzeug übertragen zu können, sind elektrische Kabel mit einem Leitungsquerschnitt von zumindest 4 mm² vorgesehen.

Zur Abgabe der elektrischen Energie an das Elektrofahrzeug ist beispielsweise an einer Vorderseite des Gehäuses 2 zumindest eine zweite Schnittstelle 7 ausgebildet. Diese zumindest eine zweite Schnittstelle 7 umfasst eine Steckbuchse 8, in welche ein Stecker eines Ladekabels eines Elektrofahrzeugs eingeführt und verriegelt werden kann. Bei der dargestellten Ladeanschlussvorrichtung 1 ist an einer Unterseite des Gehäuses 2 eine weitere, zweite Schnittstelle 9 vorgesehen, an welcher ein fix mit der Ladeanschlussvorrichtung 1 verdrahtetes, flexibles Ladekabel angeschlossen sein kann, wobei am freien Ende des flexiblen Ladekabels ein Stecker ausgebildet ist, welcher in eine entsprechende Steckbuchse am Elektrofahrzeug eingesteckt werden kann. Ein entsprechender Ladekabelabgang 10 für das flexible Ladekabel der weiteren, zweiten Schnittstelle 9 ist hierbei an der Unterseite des Gehäuses 2 ersichtlich. Welche der Ausführungsformen der zweiten Schnittstelle 7, 9 nun tatsächlich an der Ladeanschlussvorrichtung 1 vorhanden ist und ob nur eine oder mehrere zweite Schnittstellen 7, 9 ausgebildet sind, kann nach Bedarf festgelegt werden. Bei einer Ausführung der zumindest einen, zweiten Schnittstelle 7, 9 als flexibles Ladekabel ist zweckmäßigerweise eine Ladekabelhalterung 11 vorgesehen, auf welcher das flexible Ladekabel bei Nichtgebrauch verstaut werden kann. Typischerweise sind die als Steckbuchse 8 ausgeführte zweite Schnittstelle 7 und die als Kabelabgang ausgeführte zweite Schnittstelle 9 als Alternativen an der Ladeanschlussvorrichtung 1 vorgesehen.

Das Gehäuse 2 der Ladeanschlussvorrichtung 1 umschließt eine Mehrzahl von elektrotechnischen bzw. elektronischen Komponenten, welche auf wenigstens einer Leiterplatte 12 angeordnet bzw. fixiert sein können und/oder anderweitig im Gehäuse gehaltert und verdrahtet sein können. Die elektrotechnischen bzw. elektronischen Komponenten steuern und/oder überwachen unter anderem den Ladevorgang des Elektrofahrzeuges und können weiters für die Gewährleistung der elektrotechnischen Sicherheit der Ladeanschlussvorrichtung vorgesehen sein. Im Zuge der Steuerung bzw. Überwachung des Ladevorgangs ist es ebenso nötig, verschiedene Messungen, beispielsweise zur Bestimmung der Stromstärke des an das Elektrofahrzeug übertragenen Stromes, vorzunehmen. Die dazu nötigen, elektrotechnischen bzw. elektronischen Komponenten können ebenso auf der wenigstens einen Leiterplatte 12 vorhanden sein.

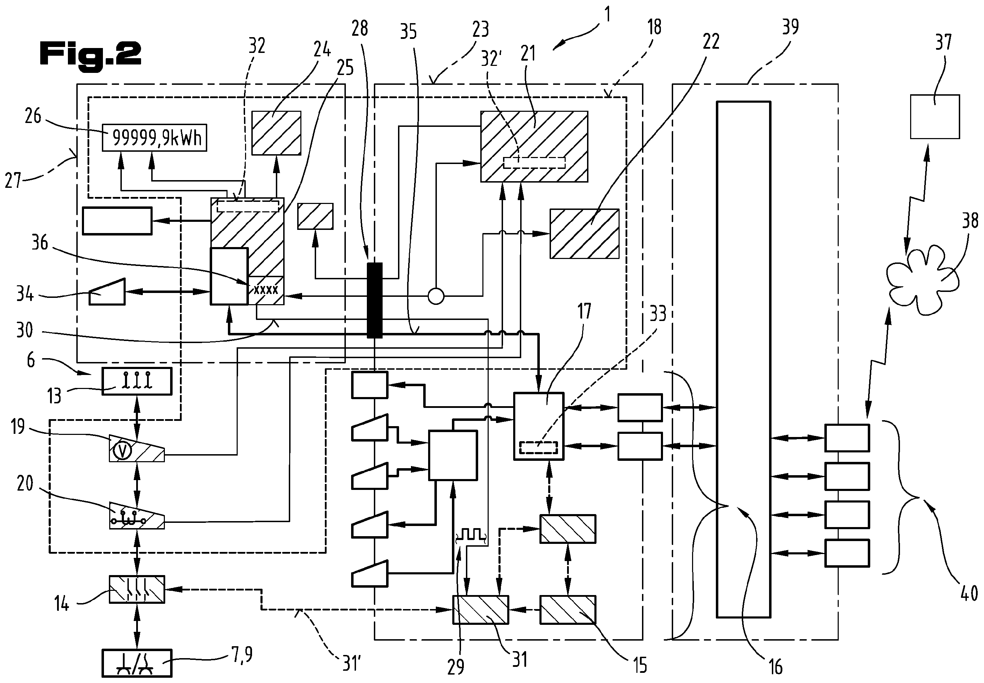

In Fig. 2 ist ein schematisches Blockschaltbild in Zusammenhang mit beispielhaft angeführten elektrotechnischen bzw. elektronischen Komponenten der Ladeanschlussvorrichtung 1 gezeigt. Diese umfassen insbesondere Anschlussklemmen 13 zum Verbinden einer Kabelzuleitung mit der ersten Schnittstelle 6 der Ladeanschlussvorrichtung 1, eine Leistungsschaltvorrichtung 14, beispielsweise einen Schütz oder einen Leistungs-Halbleiterschalter zum Herstellen bzw. Trennen einer elektrischen Verbindung zwischen der ersten Schnittstelle 6 und der zweiten Schnittstelle 7 bzw. der weiteren zweiten Schnittstelle 9 der Ladeanschlussvorrichtung 1, gegebenenfalls eine Fehlerstrom-Überwachungsvorrichtung 15, welche bei einem Fehlerstrom bzw. Erdschluss im Stromversorgungsnetz von der Ladeanschlussvorrichtung 1 bis zum Elektrofahrzeug den Stromkreis unterbricht, und eine zentrale Steuervorrichtung 16, welche vorzugsweise einen ersten Mikrocontroller 17 umfasst, der einzelne elektrotechnische bzw. elektronische Komponenten steuert bzw. mit diesen kommuniziert.

Die Ladeanschlussvorrichtung 1 umfasst weiters eine rein elektrotechnisch implementierte Energiemessvorrichtung 18 zum Messen der über die Ladeanschlussvorrichtung 1 an ein Elektrofahrzeug abgegebenen elektrischen Energie. Eine solche rein elektrotechnische Energiemessvorrichtung 18 ist im Gegensatz zu einem elektromechanischen Energiezähler kompakt und leichtgewichtig.

Die Energiemessvorrichtung 18 umfasst zumindest einen Spannungsgeber 19 je elektrischer Phase bzw. je elektrischem Pfad zur Leistungsschaltvorrichtung 14 und zumindest einen Stromwandler 20 je elektrischer Phase bzw. je elektrischem Pfad zur Leistungsschaltvorrichtung 14. Der zumindest eine Spannungsgeber 19 und der zumindest eine Stromwandler 20 sind mit einem Mess-Controller 21 verbunden und übergeben so die jeweiligen Spannungs- bzw. Stromwerte an den Mess-Controller 21. Der Mess-Controller 21 errechnet aus den übergebenen Signalen bzw. Werten die jeweils übertragene bzw. bezogene, elektrische Energiemenge.

Eine nicht-flüchtige Kalibrierdaten-Speichervorrichtung 22, insbesondere ein EEPROM-Speicher, ist ebenso wie die Steuervorrichtung 16 auf einer Hauptplatine 23 angeordnet. In der Kalibrierdaten-Speichervorrichtung 22 sind die für eine genaue Messung durch die Energiemessvorrichtung 18 erforderlichen Kalibrierdaten hinterlegt. Diese Kalibrierdaten sind geräteabhängig und variieren vor allem in Abhängigkeit der elektrischen Eigenschaften der Spannungsgeber 19 und der Stromwandler 20 bzw. in Abhängigkeit der ohmschen Widerstände der Leitungsverbindungen.

Die Energiemessvorrichtung 18 umfasst weiters eine nicht-flüchtige Energiedaten-Speichervorrichtung 24. In dieser Energiedaten-Speichervorrichtung 24 sind zumindest die von Ladesitzung zu Ladesitzung kontinuierlich ansteigenden Werte des Gesamtenergiebezuges an der Ladeanschlussvorrichtung 1 hinterlegbar.

Diese Energiedaten-Speichervorrichtung 24 ist mit einem eigenständigen Messdaten-Verwaltungscontroller 25 verbunden. Dieser Messdaten-Verwaltungscontroller 25 ist weiters mit einem Display 26 an der Ladeanschlussvorrichtung 1 verbunden. Insbesondere ist dieses Display 26 unmittelbar am Gehäuse 2 angeordnet und von einem Benutzer der Ladeanschlussvorrichtung 1 ablesbar. Dieses Display 26 ist zur Anzeige von mess- und eichrechtlich relevanten Daten in Form von Klartext vorgesehen. Insbesondere ist darauf der Gesamt-Energieverbrauch seit der ersten Inbetriebnahme der Energiemessvorrichtung 18 ablesbar. Alternativ oder in Kombination dazu kann am Display 26 die jeweilige Bezugsmenge von elektrischer Energie je Ladevorgang visualisiert und von einem Benutzer abgelesen werden.

Zumindest die Energiedaten-Speichervorrichtung 24 und der Messdaten-Verwaltungscontroller 25 sind bevorzugt auf einer baulich eigenständigen Messplatine 27 angeordnet. Diese Messplatine 27 ist über eine Steckerschnittstelle 28 mit der Hauptplatine 23 elektrisch verbindbar. Vorzugsweise dient dabei die Hauptplatine 23 als Trägerplatine für die Messplatine 27.

Die Energiemessvorrichtung 18 ist dazu eingerichtet, einen Energiefluss bzw. eine Energiefreischaltung an der zweiten Schnittstelle 7 bzw. 9 zu unterbinden, wenn die Energiemessvorrichtung 18 nicht imstande ist, einen Energiebezug messtechnisch bzw. eichrechtlich exakt zu erfassen bzw. zu messen. Dies kann aufgrund von Boot-Vorgängen der Energiemessvorrichtung 18, insbesondere des Messdaten-Verwaltungscontrollers 25 auftreten. Aber auch anderweitige Beeinflussungen bzw. Störungen können dazu führen, dass eine exakte Erfassung, insbesondere eine zeitsynchrone Bereitstellung und Messung eines Energiebezuges nicht möglich ist. Für den Fall, dass die Energiemessvorrichtung 18 nicht adäquat mess- bzw. erfassungsbereit ist, kann die Energiemessvorrichtung 18 eine Aktivierung der Leistungsschaltvorrichtung 14 unterbinden und damit einen Stromfluss zu der Abgangsschnittstelle, insbesondere zur zweiten Schnittstelle 7 bzw. 9 aktiv vermeiden. Dabei hat die Energiemessvorrichtung 18 für den Fall einer einzuleitenden Unterbindung oder Verweigerung eines Energieflusses zu der wenigstens einen zweiten Schnittstelle 7 bzw. 9 steuerungstechnisch priorisierten Einfluss auf die Schaltzustände der Leistungsschaltvorrichtung 14. Insbesondere weist die Leistungsschaltvorrichtung 14 einen ersten Schaltzustand (Aktivzustand) auf, in welchem eine Bereitstellung bzw. Übertragung von elektrischer Energie an die zumindest eine zweite Schnittstelle 7 bzw. 9 ermöglicht ist. Demgegenüber ist in einem zweiten Schaltzustand (Inaktivzustand) eine Bereitstellung bzw. Übertragung von elektrischer Energie an die zumindest eine zweite Schnittstelle 7 bzw. 9 unterbindbar. Im einfachsten Fall sind die beiden Schaltstellungen durch den Aktiv- bzw. Inaktivzustand eines elektromechanischen Leistungsschalters, insbesondere eines Schaltschütz oder eines Leistungs-Halbleiterschalters, definiert. Für jene Fälle, in denen die Energiemessvorrichtung 18 nicht messbereit bzw. nicht erfassungsbereit ist, bewirkt die Energiemessvorrichtung 18 eine Herstellung oder eine Beibehaltung des zweiten Schaltzustandes, also des Inaktivzustandes der Leistungsschaltvorrichtung 14. Dadurch wird eine Energieübertragung ausgehend von der Energiemessvorrichtung 18 steuerungstechnisch bzw. automatisch unterbunden.

Dabei kann die Energiemessvorrichtung 18 zur Abgabe bzw. Bereitstellung eines steuerungstechnischen Freigabe- bzw. Sperrsignals 29 ausgebildet sein. Hierzu ist die Energiemessvorrichtung 18 mittels wenigstens einer Steuerleitung 30, insbesondere wenigstens einer Signal- bzw. Datenleitung, mit der Steuervorrichtung 16 bzw. mit deren Leistungsschalter-Ansteuereinheit 31 verbunden. Die Steuervorrichtung 16 bzw. deren Leistungsschalter-Ansteuereinheit 31 ist zur Auswertung des steuerungstechnischen Freigabe- und/oder Sperrsignals 29 und zur auswertungsabhängigen Ansteuerung der Leistungsschaltvorrichtung 14 ausgebildet. Die Steuervorrichtung 16 bzw. deren Leistungsschalter-Ansteuereinheit 31 ist dabei über wenigstens eine Steuerleitung 31' mit der Leistungsschaltvorrichtung 14 verbunden. Dadurch ist die Leistungsschaltvorrichtung 14 in Abhängigkeit der Auswertungsergebnisse des Freigabe- und/oder Sperrsignals 29 von der Steuervorrichtung 16 bzw. von der Leistungsschalter-Ansteuereinheit 31 fallspezifisch aktivier- und deaktivierbar.

Zweckmäßig ist es, wenn die Energiemessvorrichtung 18 zur Abgabe bzw. Bereitstellung eines Sperrsignals eingerichtet, wenn seitens der Energiemessvorrichtung 18 fehlende Bereitschaft zum Messen bzw. Erfassen eines Energieflusses zu der wenigstens einen zweiten Schnittstelle 7 bzw. 9 gegeben ist. Umgekehrt ist die Energiemessvorrichtung 18 zur Abgabe bzw. Bereitstellung eines Freigabesignals eingerichtet, wenn die Energiemessvorrichtung 18 funktionsbereit ist und einen Energiefluss zur zweiten Schnittstelle 7 mess- und eichrechtskonform messen bzw. erfassen kann.

Die steuerungstechnischen bzw. datentechnischen Auswertungen durch die Steuervorrichtung 16 bzw. durch die Leistungsschalter-Ansteuereinheit 31 können beispielsweise durch eine logische UND-Verknüpfung des Freigabe- bzw. Sperrsignals 29 der Energiemessvorrichtung 18 mit wenigstens einem Freigabekriterium oder einer Schaltanforderung von Seiten der Steuervorrichtung 16 umgesetzt sein. Solche Freigabekriterien von Seiten der Steuervorrichtung 16 können durch eine Erkennung eines ordnungsgemäß angeschlossenen, ladebereiten Fahrzeuges, durch eine Freigabe von Seiten der Fehlerstrom-Überwachungsvorrichtung 15 und/oder durch eine Freigabe von Seiten einer thermischen Überwachungsvorrichtung definiert sein.

Die Funktionseinheit Energiemessvorrichtung 18 der Ladeanschlussvorrichtung 1, insbesondere deren Mess- und Auswertungssoftware 32, 32', ist messtechnisch bzw. eichrechtlich zertifiziert. Insbesondere ist die Energiemessvorrichtung 18 konform zu nationalen und/oder internationalem Mess- und Eichvorschriften ausgebildet bzw. erfüllt sie die Anforderungen an länderspezifische Maß- und Eichgesetze. Demgegenüber ist eine funktionale Betriebssoftware 33, welche von der Steuervorrichtung 16 ausgeführt wird und die sonstigen Abläufe und Funktionen der Steuervorrichtung 16 bzw. der Ladeanschlussvorrichtung 1 bestimmt, nicht nach länderspezifischen Eich- und/oder Messvorschriften zertifiziert. Insbesondere ist die Betriebssoftware 33 der Ladeanschlussvorrichtung 1 vorzugsweise nicht nach länderspezifischen Gesetzen und/oder Richtlinien in Zusammenhang mit Mess- und/oder Eichgesetzen zertifiziert oder bewertet. Dadurch können umfassende Aufwendungen für derartige Bewertungen bzw. Zertifizierungen erübrigt werden. Nachdem die Betriebssoftware 33 nur funktionale Aspekte der Ladeanschlussvorrichtung 1, beispielsweise die Kommunikation mit dem Elektrofahrzeug oder eine Mensch-Maschine-Interaktion mit einem Benutzer der Ladeanschlussvorrichtung abdeckt, ist dies akzeptabel. Insbesondere wird dies durch eine Trennung von mess- und eichrechtlich relevanten Aspekten der Energiemessvorrichtung 18 von rein funktionalen bzw. betriebsablaufspezifischen Aspekten in Zusammenhang mit der Betriebssoftware 33 der Steuervorrichtung 16 vorteilhaft ermöglicht.

Die Ladeanschlussvorrichtung 1 umfasst weiters wenigstens eine Identifikationsvorrichtung 34 zur Identifizierung unterschiedlicher Benutzer der Ladeanschlussvorrichtung 1. Die Identifikationsvorrichtung 34 kann durch eine RFID-Lesevorrichtung, durch eine Pin-Tastatur, durch eine biometrische Erfassungsvorrichtung, oder dergleichen, gebildet sein. Die Energiemessvorrichtung 18 umfasst die oben genannte Energiedaten-Speichervorrichtung 24 bzw. hat die Energiemessvorrichtung 18 auf eine solche Energiedaten-Speichervorrichtung 24 Zugriff. In dieser Energiedaten-Speichervorrichtung 24 sind die jeweiligen Daten zu Ladevorgängen bzw. Energiebezügen der jeweiligen Benutzer hinterlegbar. Besonders zweckmäßig ist es dabei, wenn diese Daten betreffend Ladevorgänge der individuellen Benutzer von der Energiemessvorrichtung datentechnisch unsigniert in der Energiedaten-Speichervorrichtung 24 hinterlegbar sind bzw. hinterlegt werden. Dies erlaubt schnelle Verarbeitungs- bzw. Speicherzeiten bei relativ geringem Speicherbedarf. Vorteilhafterweise ist dabei die Energiedaten-Speichervorrichtung 24 in einem eichrechtlich relevanten Teilabschnitt der Energiemessvorrichtung 18 angeordnet. Insbesondere ist die Energiedaten-Speichervorrichtung 24 auf jener Platine angeordnet, auf welcher auch der Messdaten-Verwaltungscontroller 25 positioniert ist. Beispielsgemäß ist dies durch die gemeinsam genutzte Messplatine 27 realisiert.

Weiters ist es zweckmäßig, wenn die Energiemessvorrichtung 18 und die Steuervorrichtung 16 jeweils eigene bzw. separat zugeordnete Mikrocontroller mit jeweils eigener Firmware aufweisen. Beispielsgemäß weist die Energiemessvorrichtung 18 den Mess-Controller 21 auf, während die funktionale Steuervorrichtung 16 der Ladeanschlussvorrichtung 1 den eigenständigen Mikrocontroller 17 umfasst.

Die Energiemessvorrichtung 18 ist vorzugsweise über ein Bussystem 35, beispielsweise via CAN-Bus oder einen sonstigen seriellen Datenbus, mit der Steuervorrichtung 16 kommunikationsverbunden. Dabei ist vorgesehen, dass die Firmware der Steuervorrichtung 16 und die Firmware der Energiemessvorrichtung 18 auch ohne Datenverbindung zwischen der Steuervorrichtung 16 und der Energiemessvorrichtung 18 lauffähig sind. Dadurch wird ein möglichst rückwirkungsfreier, prinzipiell autarker Betrieb der jeweiligen Einheiten ermöglicht.

Eine überwiegend programmgesteuerte bzw. softwaretechnische Implementierung in der Ladeanschlussvorrichtung 1 sieht vor, dass die Steuervorrichtung 16 dazu eingerichtet ist, vor jedem Start eines Ladevorganges eine datentechnische Kennung 36 der Energiemessvorrichtung 18, beispielsweise eine eineindeutige Seriennummer, auszulesen und auf Gültigkeit zu überprüfen. Von der Steuervorrichtung 16 bzw. Energiemessvorrichtung 18 ist dabei ein Start eines Ladevorganges unterbindbar, wenn diese datentechnische Kennung 36 als ungültig erkannt wird oder unbekannt ist. Manipulationen bzw. unerlaubte Zuordnungen zwischen einer manipulierten Energiemessvorrichtung 18 und/oder einer manipulierten Steuervorrichtung 16 können dadurch erschwert bzw. hintangehalten werden.

Weiters kann eine datentechnische Vernetzung einer Mehrzahl von Ladeanschlussvorrichtungen 1 mit einem zentralen Verwaltungssystem 37 vorgesehen sein. Die datentechnische Kommunikation zwischen den jeweiligen Ladeanschlussvorrichtungen 1 und dem zentralen Verwaltungssystem 37, insbesondere einem sogenannten Backend-System, kann beispielsweise via das Internet 38 vorgesehen sein. Hierfür umfasst die Ladeanschlussvorrichtung 1 eine erweiterte Kommunikationsbaugruppe 39 mit wenigstens einer datentechnischen Kommunikationsschnittstelle 40 zur Fernkommunikation mit dem zentralen Verwaltungssystem 37.

Das Ausführungsbeispiel zeigt mögliche Ausführungsvarianten, wobei an dieser Stelle bemerkt sei, dass die Erfindung nicht auf die speziell dargestellten Ausführungsvarianten eingeschränkt ist und nicht alle der dargestellten Ausführungsvarianten umfassen muss. Zudem sind diverse Kombinationen der einzelnen Ausführungsvarianten untereinander möglich sind und liegt diese Variationsmöglichkeit aufgrund der Lehre zum technischen Handeln durch gegenständliche Erfindung im Können des auf diesem technischen Gebiet tätigen Fachmannes.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Ladeanschlussvorrichtung | 29 | Freigabe- und/oder Sperrsignal |
| 2 | Gehäuse | 30 | Steuerleitung |
| 3 | vorderes Gehäuseteil | 31 | Leistungsschalter-Ansteuereinheit |
| 4 | hinteres Gehäuseteil | 31' | Steuerleitung |
| 5 | weitere Gehäuseteile | 32, 32' | Mess- und Auswertungssoftware |
| 6 | erste Schnittstelle | | |
| 7 | zweite Schnittstelle | 33 | Betriebssoftware |
| 8 | Steckbuchse | 34 | Identifikationsvorrichtung |
| 9 | zweite Schnittstelle | 35 | Bussystem |
| 10 | Ladekabelabgang | 36 | datentechnische Kennung |
| 11 | Ladekabelhalterung | 37 | zentrales Verwaltungssystem |
| 12 | Leiterplatte | 38 | Internet |
| 13 | Anschlussklemmen | 39 | Kommunikationsbaugruppe |
| 14 | Leistungsschaltvorrichtung | 40 | Kommunikationsschnittstelle |
| 15 | Fehlerstrom-Überwachungsvorrichtung | | |
| 16 | Steuervorrichtung | | |
| 17 | erster Mikrocontroller | | |
| 18 | Energiemessvorrichtung | | |
| 19 | Spannungsgeber | | |
| 20 | Stromwandler | | |
| 21 | Mess-Controller | | |
| 22 | Kalibrierdaten-Speichervorrichtung | | |
| 23 | Hauptplatine | | |
| 24 | Energiedaten-Speichervorrichtung | | |
| 25 | Messdaten-Verwaltungscontroller | | |
| 26 | Display | | |
| 27 | Messplatine | | |
| 28 | Steckerschnittstelle | | |

## Patentansprüche

1. Ladeanschlussvorrichtung (1) für Elektrofahrzeuge, umfassend
- zumindest eine erste Schnittstelle (6) zum Beziehen von elektrischer Energie aus einem ortsfesten Stromversorgungsnetz,
- zumindest eine zweite Schnittstelle (7, 9) zur gesteuerten Abgabe von elektrischer Energie an ein Elektrofahrzeug,
- eine elektronische Steuervorrichtung (16) mit welcher ein Ladevorgang eines Elektrofahrzeugs überwachbar und/oder beeinflussbar ist,
- eine Leistungsschaltvorrichtung (14) mit einem ersten Schaltzustand in welchem eine Bereitstellung von elektrischer Energie an der zumindest einen zweiten Schnittstelle (7, 9) freischaltbar ist und mit einem zweiten Schaltzustand in welchem eine Bereitstellung von elektrischer Energie an der zumindest einen zweiten Schnittstelle unterbindbar ist,
- eine Energiemessvorrichtung (18) zum Messen der über die Ladeanschlussvorrichtung (1) an ein Elektrofahrzeug abgegebenen elektrischen Energie,
- ein Gehäuse (2) in welchem wenigstens die elektronische Steuervorrichtung (16) und die Leistungsschaltvorrichtung (14) und gegebenenfalls die Energiemessvorrichtung (18) untergebracht sind,
**dadurch gekennzeichnet, dass**
die Energiemessvorrichtung (18) weiters dazu eingerichtet ist, einen Energiefluss zu der wenigstens einen zweiten Schnittstelle (7, 9) zu unterbinden,
wobei die Energiemessvorrichtung (18) für den Fall einer auszuführenden Unterbindung des Energieflusses zu der wenigstens einen zweiten Schnittstelle (7, 9) priorisierten steuerungstechnischen Einfluss auf die Leistungsschaltvorrichtung (14) hat und eine Herstellung oder Beibehaltung des zweiten Schaltzustandes der Leistungsschaltvorrichtung (14) bewirkt.

2. Ladeanschlussvorrichtung nach Anspruch 1, **dadurch gekennzeichnet, dass** die Energiemessvorrichtung (18) zur Abgabe oder Bereitstellung eines steuerungstechnischen Freigabe- und/oder Sperrsignals (29) ausgebildet ist.

3. Ladeanschlussvorrichtung nach Anspruch 1 oder 2, **dadurch gekennzeichnet, dass** die Energiemessvorrichtung (18) mit der Steuervorrichtung (16) verbunden ist und die Steuervorrichtung (16) zur Auswertung des steuerungstechnischen Freigabe- und/oder Sperrsignals (29) ausgebildet ist, wobei die Steuervorrichtung (16) mit der Leistungsschaltvorrichtung (14) verbunden ist und die Leistungsschaltvorrichtung (14) in Abhängigkeit der Auswertung des Freigabe- und/oder Sperrsignals (29) von der Steuervorrichtung (16) ansteuerbar ist.

4. Ladeanschlussvorrichtung nach einem der vorhergehenden Ansprüche, **dadurch gekennzeichnet, dass** die Energiemessvorrichtung (18) zur Abgabe eines Sperrsignals ausgebildet ist, wenn seitens der Energiemessvorrichtung (18) fehlende Bereitschaft zum Messen eines Energieflusses zu der wenigstens einen zweiten Schnittstelle (7, 9) gegeben ist.

5. Ladeanschlussvorrichtung nach Anspruch 3 oder 4, **dadurch gekennzeichnet, dass** die Steuervorrichtung (16) im Zuge der Auswertung des Freigabe- und/oder Sperrsignals (29) der Energiemessvorrichtung (18) zur logischen UND-Verknüpfung des Freigabe- und/oder Sperrsignals (29) der Energiemessvorrichtung (18) mit wenigstens einem Freigabekriterium oder einer Schaltanforderung von Seiten der Steuervorrichtung (16) ausgebildet ist.

6. Ladeanschlussvorrichtung nach einem der vorhergehenden Ansprüche, **dadurch gekennzeichnet, dass** die Energiemessvorrichtung (18), insbesondere deren Mess- und Auswertungssoftware (32, 32'), nach länderspezifischen Eichgesetzen und/oder Messrichtlinien zertifiziert und/oder bewertet ist.

7. Ladeanschlussvorrichtung nach einem der vorhergehenden Ansprüche, **dadurch gekennzeichnet, dass** die Steuervorrichtung (16) in ihren Abläufen und Funktionen zumindest teilweise durch Betriebssoftware (33) gesteuert und/oder beeinflusst ist und diese Betriebssoftware (33) nicht nach länderspezifischen Eichgesetzen und/oder Messrichtlinien zertifiziert und/oder bewertet ist.

8. Ladeanschlussvorrichtung nach einem der vorhergehenden Ansprüche, **dadurch gekennzeichnet, dass** eine Identifikationsvorrichtung (34) zur Identifizierung unterschiedlicher Benutzer der Ladeanschlussvorrichtung (1) ausgebildet ist, und dass die Energiemessvorrichtung (18) eine Energiedaten-Speichervorrichtung (24) umfasst oder auf eine Energiedaten-Speichervorrichtung (24) Zugriff hat, in welcher Daten zu Ladevorgängen oder Energiebezügen der jeweiligen Benutzer hinterlegbar sind.

9. Ladeanschlussvorrichtung nach Anspruch 8, **dadurch gekennzeichnet, dass** die Daten zu den Ladevorgängen oder Energiebezügen von der Energiemessvorrichtung (18) datentechnisch unsigniert hinterlegbar sind.

10. Ladeanschlussvorrichtung nach Anspruch 8 oder 9, **dadurch gekennzeichnet, dass** die Energiedaten-Speichervorrichtung (24) in einem eichrechtlich relevanten Teilabschnitt der Energiemessvorrichtung (18) angeordnet ist.

11. Ladeanschlussvorrichtung nach einem der vorhergehenden Ansprüche, **dadurch gekennzeichnet, dass** die Energiemessvorrichtung (18) und die Steuervorrichtung (16) jeweils eigene Mikrocontroller (21, 25; 17) mit jeweils eigener Firmware aufweisen.

12. Ladeanschlussvorrichtung nach einem der vorhergehenden Ansprüche, **dadurch gekennzeichnet, dass** die Energiemessvorrichtung (18) über ein Bussystem (35) mit der Steuervorrichtung (16) kommunikationsverbunden ist, wobei die Firmware der Steuervorrichtung (16) und die Firmware der Energiemessvorrichtung (18) auch ohne Datenverbindung zwischen der Steuervorrichtung (16) und der Energiemessvorrichtung (18) lauffähig sind.

13. Ladeanschlussvorrichtung nach einem der vorhergehenden Ansprüche, **dadurch gekennzeichnet, dass** die Energiemessvorrichtung (18) mit einem Display (26) verbunden ist, welches Display (26) zur Anzeige mess- und eichrechtlich relevanter Daten, beispielsweise eines Gesamt-Energieverbrauchs seit Inbetriebnahme der Energiemessvorrichtung (18) und/oder einer Bezugsmenge je Ladevorgang, vorgesehen ist.

14. Ladeanschlussvorrichtung nach einem der vorhergehenden Ansprüche, **dadurch gekennzeichnet, dass** die Steuervorrichtung (16) dazu eingerichtet ist, vor jedem Start eines Ladevorganges eine datentechnische Kennung (36) der Energiemessvorrichtung (18) auszulesen und auf Gültigkeit zu überprüfen, wobei von der Steuervorrichtung (16) oder der Energiemessvorrichtung (18) der Start eines Ladevorganges unterbindbar ist, wenn die datentechnische Kennung als ungültig oder unbekannt erkannt ist.
